# EUROPEAN PATENT APPLICATION

(11) **EP 1 722 538 A1**
(43) Date of publication of application: **15.11.2006**
(21) Application number: 05010522.0
(22) Date of filing: 13.05.2005
(51) Int. Cl.: H04M 1/02, G06F 1/16

(54) **Sliding-type handheld electronic device with dual operation mode and two keyboards**

(71) Applicant: High Tech Computer Corp., Taoyuan (TW)
(72) Inventor: Chou, Peter, Taoyuan City, Taoyuan (TW)
(74) Representative: Weber, Joachim

(57) **Abstract**

A hand-held electronic device includes a cover, a display screen,-a body and a sliding mechanism. A first input keyboard and a second input keyboard are mounted on the cover and the body, respectively. The display screen disposed on the cover has a first display mode and a second display mode switchable therebetween. The sliding mechanism is coupled with the cover and the body so that the cover is slidable to be opened or closed relative to the body. The first input keyboard is a Telephone keyboard, while the second input keyboard is a Qwerty keyboard. When the cover slides to the open position relative to the body, the cover is upward tilted to an angle for the user to view the information on the display due to the tilted sliding mechanism design.

## Description

This application claims the benefit of Taiwan application Serial No. 93215706, filed October 4, 2004, the subject matter of which is incorporated herein by reference.

### BACKGROUND OF THE INVENTION

### Field of the Invention

The present invention relates to a hand-held electronic device and particularly to a hand-held electronic device with dual operation mode.

### Description of the Related Art

In recent years, with electronic industry flourishing development, hand-held electronic devices, such as mobile phone and Personal Digital Assistant, have come with the trend of fashion.

Taking the mobile phone as an example, the use of the mobile phone facilitates communication whenever and wherever possible without the limitation of fixed location. Therefore, the mobile phone has rapidly gained popularity and becomes important communication apparatus. Except for the basic conversation function, the services of the voice mail and text message transmission provided by the industry fulfill the mobile phone. Message transmission is the important and frequently used function of the mobile phone. The ease of instant message input would directly determine the ease of operation, so it is an important indicator for the purchase of the mobile phone. Furthermore, the third generation mobile phone includes having a mailbox for receiving and sending email, Internet browsing and network transaction.

However, currently, the configuration of the mobile phone keyboard is to join the function of letter keys into the numerical keys 0-9. For example, 26 English letters A to Z are distributed among these 10 numerical keys. Thus each numerical key represents at least 3 English letters such as number key '2' represent 'A', 'B', 'C'. Each numerical key represents several English letters. In other words, when making text inputs by using numerical keys, users have to select the desired English letters at every strike on the numerical key. It is quite annoying when more English letters input, the more selections are needed. Users often waste time on searching for desired letters to input and feel awkward to operate the keys users are not familiar with. Furthermore, it is much more inconvenient to enter Chinese characters than English text by the Telephone keyboard.

### SUMMARY OF THE INVENTION

It is therefore an object of the invention to provide a hand-held electronic device with dual operation mode so as to solve the problem resulting from the input inconvenience of the conventional hand-held electronic device.

It is an object of the invention to provide a hand-held electronic device including a cover, a display, a body and a sliding mechanism. The first input keyboard and the second input keyboard are disposed on the cover and the body, respectively. The display disposed on the cover has the first display mode and the second display mode switchable therebetween. The sliding mechanism couples the cover and the body so that the cover is slidable to be opened or closed relative to the body. The sliding mechanism includes the first sliding portion and the second sliding portion. The first sliding portion and the second sliding portion are disposed on the body and the cover, respectively. The relative sliding between the second sliding portion and the first sliding portion enables the cover to be opened or closed relative to the body. Therefore, when the cover slides to be closed, the display is switched to the first display mode and the second input keyboard is in a hidden state, and when the cover slides to be opened, the display is switched to the second display mode and the second input keyboard is in an inputting state. The first input keyboard is a telephone keyboard, while the second input keyboard is a Qwerty keyboard. The sliding mechanism is designed to be tilted so that the cover is upward tilted to an angle for the user to view the information on the display when the cover is at its open position.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1 is a schematic drawing illustrating the first operation mode of the hand-held electronic device according to the present invention.

FIG. 2 is a schematic drawing illustrating the second operation mode of the hand-held electronic device depicted in the FIG. 1.

FIG. 3A is a front view of the hand-held electronic device according to a first embodiment of the present invention.

FIG. 3B is a schematic drawing illustrating the cover being opened relative to the body according to the first embodiment of the present invention.

FIG. 4A is a front view of the hand-held electronic device according to a second embodiment of the present invention.

FIG. 4B is a schematic drawing illustrating the cover being in open position relative to the body according to the second embodiment of the present invention.

### DETAILED DESCRIPTION OF THE INVENTION

The hand-held electronic device employs a slidable keyboard and a switchable display to provide dual operation mode which significantly facilitates its usage. The mobile phone is taken as an example in the following embodiment. However, the technology and features disclosed in the invention can be applied to various hand-held electronic devices such as the Smart Phone, and the Personal Digital Assistance.

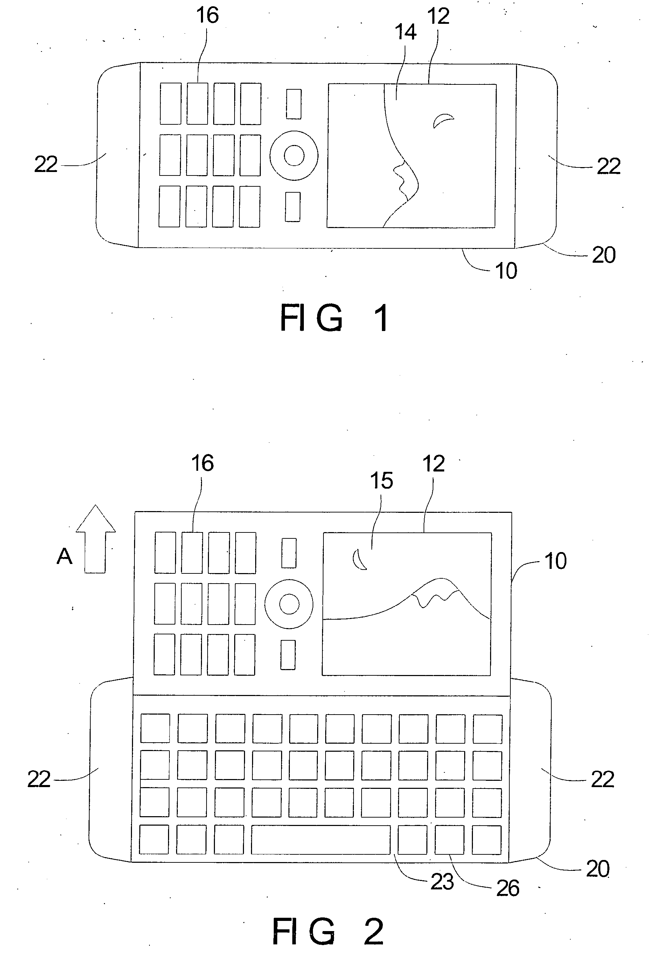

Referring to both FIG. 1 and FIG. 2, schematic drawings illustrate the first operation mode and the second operation mode of the hand-held electronic device, respectively, according to the invention. The invention utilizes a sliding mechanism to couple a cover 10 and a body 20 of the hand-held electronic device so that the cover 10 is slidable to be opened or closed relative to the body 20. The sliding mechanism includes a first sliding portion and a second sliding portion. The first sliding portion and the second sliding portion are disposed on the body 20 and the cover 10, respectively. The cover 10 is slidably disposed above the body 20 and movable between an open position and a close position. When the second sliding portion slides relative to the first sliding portion, the cover 10 can be opened or closed relative to the body 20. The cover 10 includes a display 12 and a first input keyboard 16 disposed thereon. The body 20 includes protruding members 22 placed at two sides thereof, a recess 23 disposed between the two protruding portions 22, and a second input keyboard 26 located on the bottom surface of the recess 23. Under the first operation mode (FIG.1), the cover 10 slides to be closed relative to the body 20 and covers the second input keyboard 26. Under the second operation mode (FIG. 2), the cover 10 slides away the recess 23 to be opened relative to the body 20 so that the second input keyboard 26 is exposed. The first input keyboard 16 is a telephone keypad including numerical keys 0-9, * key, # key and other functional keys (such as receiving/ hanging up key and round directional keys). The second input keyboard 26 is a Qwerty keyboard.

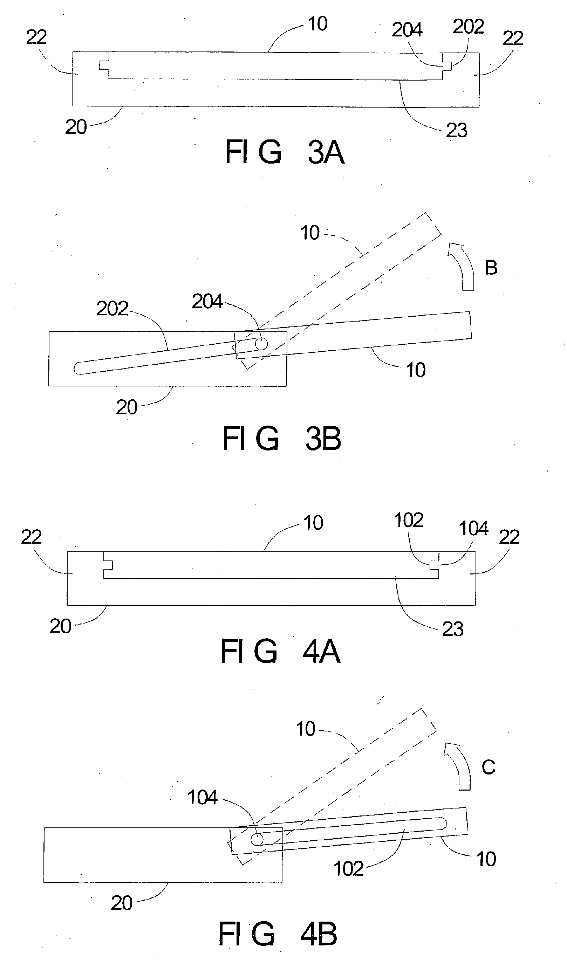

Referring to FIG. 3A, a front view illustrating the hand-held electronic device according to the first embodiment of the present invention is shown. In the first embodiment, the first sliding portion is a chute 202 disposed in the internal sides of the bilateral protruding portions 22 of the body 20. The second sliding portion is a round protruding member 204, which is slidably engaged in the chute 202 and located at the front of the side of the cover 10. Each end of the chute 202 includes the position points (no numeral labelled) for engaging with the round protruding member 204 on the side of the cover 10 such that the cover 10 can slide to the close or open position. Referring to FIG. 3B, a schematic drawing illustrates the cover 10 is opened relative to the body 20 according to the first embodiment of the invention. As shown in the FIG. 3B, the chute 202 is an inclined chute.
When the cover 10 slides to the open position, the round protruding member 204 is engaged in the rear end of the chute 202, and the cover 10 slightly tilts upwards. In order to adjust the angle between the display 12 and the second input keyboard 26, the users can further rotate the cover 10 by following the direction of arrow B to the position indicated by the dashed line. Therefore, the users can view the content displayed on the display while typing at the same time.

Referring to FIG. 4A, a front view illustrating the hand-held electronic device according to the second embodiment of the present invention is shown. In the second embodiment, the second sliding portion is a chute 102 disposed in the lateral wall of the cover 10. The first sliding portion is a round protruding member 104 which is located on the rear inside wall of the bilateral protruding portions 22 of the body 20. As shown in the FIG. 4B, the chute 102 is an inclined chute. When the cover 10 slides to the open position, the round protruding member 104 is engaged in the front of the chute 102, and the cover 10 slightly tilts upwards. In order to adjust the angle between the display 12 and the second input keyboard 26, the users can further rotate the cover 10 by following the direction of arrow C to the position indicated by the dashed line. Therefore, the users can read the content displayed on the display while typing at the same time.

As shown in the FIG. 2, when the hand-held electronic device is switched from the first operation mode into the second operation mode, the cover 10 slides to be opened relative to the body 20 by exerting an external force on the cover 10 along the direction of arrow A. The display 12 disposed on the cover 10 has the first display mode 14 and the second display mode 15 switchable therebetween. As shown in the FIG. 1 and FIG. 2, the first display mode 14 is a longitudinal display mode (or called a portrait mode), and the second display mode 15 is a transverse display mode (or called a landscape mode). The switchable display according to the invention allows users to key in using both telephone keypad and Qwerty keyboard without repeatedly rotating the hand-held electronic device to view the display content.

In FIG. 1, when the cover 10 slides to be closed relative to the body 20, the hand-held electronic device is in the first operation mode. Users can input through the first input keyboard 16, dial telephone by numerical keys, or can operate the hand-held electronic device via application keys with basic functions of answering, hanging up the telephone and telephone inquiry. Under the first operation mode, the display 12 is switched to the first display mode 14, and the second input keyboard 26 is hidden underneath the cover 10. In addition, the first input keyboard 16 is correspondingly arranged according to the first display mode 14 of the display 12. Therefore, the users can view the content displayed on the display 12 in the same direction with keying in the first input keyboard 16 at the same time.

In FIG. 2, when the cover 10 slides to be opened relative to the body 20, the hand-held electronic device is in the second operation mode. Users can input data through the second input keyboard 26, input instant text message or mail via the Qwerty keyboard 26 disposed on the body 20 and perform Internet browsing or transaction. Under the second operation mode, the display 12 is switched to the second display mode 15, and second input keyboard 26 is exposed in an inputting state ready for operation. In addition, the second input keyboard 26 is correspondingly arranged according to the second display mode 15 of the display 12. Therefore, the configuration of the second input keyboard 26 enables the users to input and directly view the content on the display 12 with the same direction.

In comparison with the conventional mobile phone, the hand-held electronic device with the dual operation mode disclosed in the above embodiment is equipped with a telephone keyboard and a Qwerty keyboard, which is mounted on the cover and body, respectively. Accordingly, the present invention allows users to input by using both telephone keypad and Qwerty keyboard to view the display content without repeatedly rotating the hand-held electronic device. Moreover, with the design of the slidable keyboard and switchable display, the hand-held electronic device is swithable between the first operation mode and the second operation mode depending on practical demands of users. Therefore, convenience of operating is enhanced and then the competitiveness of the market is boosted accordingly. The design of the sliding mechanism tilt the cover relative to the body according to the embodiment of the invention, users can adjust the angle between the display on the cover and the second input keyboard of the body. Accordingly, users can read the content displayed on the display more easily.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A hand-held electronic device with dual operation mode, comprising:
a cover including a first input keyboard;
a display, disposed on the cover and having a first display mode and a second display mode switchable therebetween;
a body including a second input keyboard; and
a sliding mechanism coupling the cover and the body so that the cover is slidable to be opened or closed relative to the body,
wherein when the cover slides to be closed relative to the body, the display is switched to the first display mode and the second input keyboard is in a hidden state, and when the cover slides to be opened relative to the body, the display is switched to the second display mode and the second input keyboard is in an inputting state.

2. The device according to claim 1, wherein the first input keyboard is a telephone keyboard, and the second keyboard is a Qwerty keyboard.

3. The device according to claim 2, wherein the sliding mechanism comprises:
a first sliding portion disposed on the body; and
a second sliding portion disposed on the cover, wherein the second sliding portion is slidable relative to the first sliding portion so as to open or close the cover relative to the body.

4. The device according to claim 3, wherein the first sliding portion is an inclined chute, for slidably receiving the second sliding portion.

5. The device according to claim 4, wherein the body has a recess to allow the Qwerty keyboard being disposed on a bottom surface of the recess and the cover being disposed within the recess.

6. The device according to claim 5, wherein the second sliding portion is a protruding member.

7. The device according to claim 6, wherein the first display mode of the display is a portrait mode and the second display mode of the display is a landscape mode.

8. The device according to claim 3, wherein the second sliding portion is an inclined chute, for slidably receiving the first sliding portion.

9. The device according to claim 8, wherein the body has a recess to allow the Qwerty keyboard being disposed on a bottom surface of the recess and the cover being disposed within the recess.

10. The device according to claim 9, wherein the first display mode of the display is a portrait mode and the second display mode of the display is a landscape mode.

11. A hand-held electronic device with dual operation mode, comprising:
a body including a Qwerty keyboard disposed thereon; and
a cover slidably disposed above the body and movable between an open position and a close position, the Qwerty keyboard being covered by the cover while the cover is in the close position, the Qwerty keyboard being exposed while the cover is in the open position, the cover having a display and a telephone keyboard disposed thereon.

12. The device according to claim 11, wherein the cover is tilted while the cover is in the open position.

13. The device according to claim 12, wherein the display is a portrait mode while the cover is in the close position, and the display is a landscape mode while the cover is in the open position.

14. The device according to claim 13, wherein the body has protruding portions and a recess, the protruding portions are disposed on two sides of the body, the recess is formed between the protruding portions, the Qwerty keyboard is fixed on a bottom surface of the recess, and the cover is disposed above the Qwerty keyboard and within the recess.

15. The device according to claim 14, wherein the protruding portions has an inclined chute disposed in an internal side thereof, and the cover includes a protruding member slidably engaged in the inclined chute.

16. The device according to claim 14, wherein the cover has an inclined chute disposed in an internal sides thereof, and the protruding portion includes a protruding member slidably engaged in the inclined chute.

17. The device according to claim 15, wherein the telephone keyboard comprises numerical keys 0-9, * key, # key, receiving/hanging up telephone key and direction keys.

18. The device according to claim 16, wherein the telephone keyboard comprises numerical keys 0-9, * key, # key, receiving/hanging up telephone key and direction keys.

19. A hand-held electronic device with dual operation mode, comprising:
a body having a recess to allow a Qwerty keyboard being disposed on a bottom surface of the recess;
a cover which is linearly slidable within the recess and has a display and a telephone keyboard disposed thereon.

20. the device according to claim 19, wherein the display has two display modes: a portrait mode and a landscape mode.
